# EUROPEAN PATENT APPLICATION

(11) **EP 0 945 096 A1**
(43) Date of publication of application: **29.09.1999**
(21) Application number: 98122955.2
(22) Date of filing: 03.12.1998
(51) Int. Cl.: A47J 41/00

(54) **High thermal insulation gastronorm container**

(30) Priority: 26.03.1998 IT MI980636
(71) Applicant: MORI 2A S.r.l., 28080 NUVOLENTO (Brescia) (IT)
(72) Inventor: Mori, Aristide, 25080 NUVOLETO (Brecia) (IT)
(74) Representative: Lecce, Giovanni

(57) **Abstract**

A double-body, high thermal insulation gastronorm container particularly suitable for the transportation and distribution of hot food and drinks is provided.

In particular, said container is made up by two complementary box-like distinct bodies (16, 18) each body having a flat bottom (14, 14'), an edge (12, 12') and an inclined side surface (15, 15'), fitted in and connected to each other along edges (12, 12').

Said box-like bodies (16, 18) have different heights and bottom (14, 14') surfaces so as to form between each other a continuous chamber or gap (26) of homogeneous height in the area comprised between said edges (14, 14') and a width that progressively decreases from bottom (14, 14') towards edge (12, 12') in the area comprised between said side surfaces (15, 15').

An insulating material (30) may be inserted in the inside of gap (26).

## Description

The present invention relates to a high thermal insulation gastronorm container.

More particularly, the present invention relates to a high thermal insulation gastronorm container from stainless steel in the various compositions, particularly suitable for use for the transportation and distribution of hot food and drinks.

By the term "gastronorm container" there is intended to indicate in the present description and the claims those containers utilised for food cooking, transportation and distribution, having different perimetral size, such as to allow the formation of various compositions having heights of from 20 to 200 mm. This line of containers is identified by an international norm, known by the name of EN631, which prescribes to all manufacturers the compliance with fixed size standards.

Said containers are generally from stainless steel in the various compositions, and comprise a flat bottom, an upper edge and an inclined side surface which diverges from the bottom towards the edge, in such a way as to allow to stack them into one another during the storing.

As is known, there is often needed to keep cooked food hot during the period from the cooking and the consumption to prevent or delay its cooling during transportation.

For this purpose thermal boxes are used from insulating materials, wherein the metal containers containing hot food are inserted. However, this solution is not without drawbacks, as thermal boxes are bulky and expensive.

Object of this invention is to obviate the aforesaid drawbacks or in any case to improve their performances.

More particularly, object of this invention is to provide a container especially suitable for the transportation of hot food, such as to allow to obtain a high level of thermal insulation and to markedly limit heat dispersion.

From its more general aspect, the present invention allows to obtain the aforesaid aims by using a double-body gastronorm container from stainless steel in the various compositions.

The container subject matter of the present invention is made up by two distinct box-like complementary bodies inserted into each other, fixed along the edge and forming between each other a continuous gap which extends from the bottom to the edge.

In particular, each box-like body comprises a flat bottom, an edge and an inclined side surface divergent from the bottom towards the edge.

The two bodies have different heights and bottom surfaces and, when they are inserted into each other and connected between each other along the edge, they form with each other a chamber or gap of homogeneous height in the area comprised between the two bottoms, and of a progressively decreasing width from the bottom upwards, in the area comprised between said side surfaces.

Preferably, the container of the present invention has a substantially quadrangular or rectangular shape, a frustum pyramidal section and the size fixed by the international norm EN631.

The side surfaces of each box-like body are inclined at an inclination angle which is different for each body so as to be separated along all the surface of the body and to join only in correspondence of the upper edge of the container.

Besides, according to a preferred embodiment, the thickness of the walls of the external box-like body is greater than that of the walls of the internal box-like body.

Between the two box-like bodies an insulating material may be inserted, in order to further increase the insulating power of the container.

The construction and functional characteristics of the high insulation gastronorm container of the present invention will be better understood thanks to the following description, wherein reference is made to the attached drawings that represent a preferred non limiting embodiment, wherein:
Figure 1 shows a plan schematic view of the high thermal insulation container of the present invention;
Figure 2 shows a schematic view of a cross-section obtained along a plane passing through the A-A line of said container; and

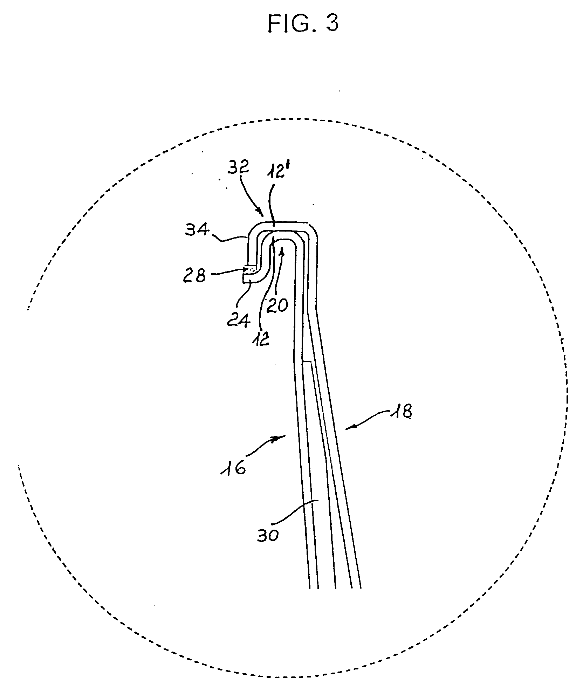

Figure 3 shows the enlarged schematic view of the connection between the two box-shaped bodies of Figure 2.

The gastronorm container illustrated in the figures is one of the containers of the series which is composed by 10 models having different perimetral sizes which actually allow the symmetrical composition of the same, as provided for by the international norm EN631.

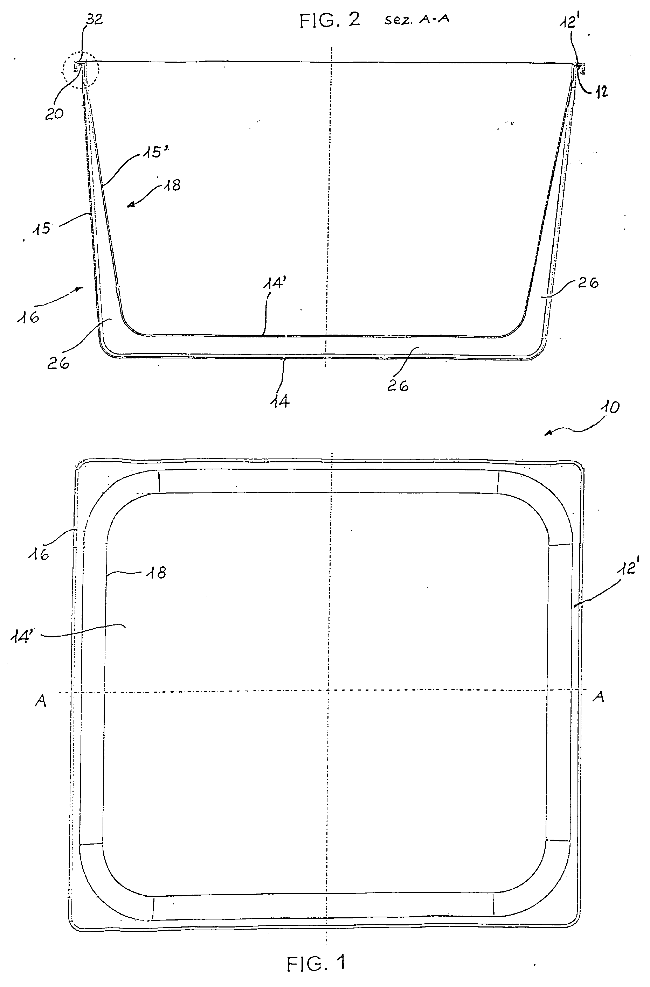

With reference to said figures, the high thermal insulation container of the present invention, indicated as a whole by 10 in Figure 1, is constituted by two distinct box-like bodies inserted into each other: an external body (16) and an internal body (18).

Said box-like bodies (16, 18) may be from stainless steel or other metal material, preferably from AISI 304 steel, commonly referred to as 18/10 steel.

Each box-like body (16, 18) comprises a flat bottom (14, 14'), an edge (12, 12'), more extended with respect to said bottom, and a side surface (15, 15'), inclined and divergent from bottom (14. 14') toward edge (12, 12').

The box-like bodies have different heights, and precisely the external body (16) has a greater length than the internal one (18).

Bottoms (14, 14') of the two containers (16, 18) have different surfaces; more precisely, the surface of bottom (14) of the external body (16) is greater than the one of the internal body (18), while edges (12, 12') have a slightly different development, so that they can be inserted into one (12') another (12) in touch with each other.

The two box-like bodies (16, 18) are inserted into each other and connected to each other only along edges (12 12') by welding, as specified hereafter.

Edge (12) of the external box-like body (16), in correspondence of its free end (20), is substantially shaped as an inverted "U", being bent first towards the outside, with respect to said box-like body, with an orientation parallel to bottom (14) and afterwards towards said bottom, parallel to its own vertical axis. A further bending towards the outside of end (20) forms an annular extension (24) having a limited length, comprised by way of example between 1,5 and 3,0 mm, and parallel with respect to bottom (14).

The thickness of the external body (16) varies as function of the size and height of the container (10) and may be comprised, by way of example, between 0,6 and 2 mm.

The internal box-like body (18) has, with respect to the internal box-like body (16), a preferably smaller thickness, a bottom (14') of smaller thickness, a side surface (15') of a greater inclination, and an edge (12') of complementary shape and size, so that the bodies can be inserted into each other.

The free end (32) of edge (12') of said internal box-shaped body (18) is bent towards the outside with a section shaped like a reversed "U", being first bent towards the outside with respect to container (10), parallel to bottom (14') and the first bending of edge (12) of the external body (16), and afterwards downwards, parallel to its own vertical axis and the second bending of said edge (12) to form a strip (34) of limited height, as defined hereunder.

The extension of said bendings is such that, when the two box-like bodies (16, 18) are inserted into each other, the first bent part of edge (12') of the internal body (12) rests on the corresponding first part of edge (12) of the external body (16) bent towards the outside. Strip (34) of edge (12') superposes to the second part bent towards bottom (12) of the external box-like body (16) and its lower end is close to but not in touch with extension (24) of edge (12) of said external box-like body (16).

As the height of the internal box-like body (18) is smaller that that of the external box-like body (16) because of the insertion of the internal body (18) in the external one (16) with bearing of said bent portions of the respective edges (12,12'), the respective bottoms (14, 14') are distant from each other, forming between each other a chamber or gap (26). Said gap (26) extends also in correspondence of the side surfaces (15, 15') of the two bodies, creating a continuous gap up the bearing points of the two edges (12, 12').

The width of gap (26) progressively reduces from the bottom (14, 14') towards edges (12, 12) as function of said different inclination of the side surfaces (15, 15') of the two box-like bodies (16, 18).

Said box-like bodies (16, 18) once they are inserted into each other and the first parts have been bent towards the outside of edges (12, 12') and are resting on each other, are connected by welding with a welding addition material (28), in the space existing between extension (24) and strip (34).

Following the welding, the two bodies (16, 18) are finally connected to each other only along their edges (12, 12') and gap (26) formed between said bodies is tight-sealed.

Within said gap there remains imprisoned air which act as an insulating material and markedly reduces the dispersion from the food contained in container (10).

The insulating action of the container of the present invention may be increased by placing an insulating material (30) in gap (26) or part thereof. Said insulating material (30) has a thickness compatible with the width of gap (26) and is stricken and kept in position by the internal box-like body (18) inserted in the external box-like body (16).

As can be understood from the above, many advantages are achieved by the present invention.

The double-body gastronorm container of the present invention allows to markedly reduce heat dispersion from the contained food, even though its is made from metal. To this aim, there proved particularly advantageous the configuration and development of the insulating chamber or gap, which has a greater width in correspondence of the bottom of the container and its adjoining parts, i.e. in the points where the mass or amount of food is greater, progressively narrowing upwards.

Such narrowing reduces the amount of hot air which accumulates in the upper part of the container, promoting its downwards recirculation.

While the present invention has been described with reference to the figures which represent an embodiment solely given by way of non limiting example, many changes and variants may be introduced by those skilled in the art in the light of the above description. It is therefore understood that the present invention covers all the changes and variants that fall within the spirit and the protection scope of the following claims.

For instance, the container of the present invention and the box-like bodies that make it up may have a different configuration with respect to the one described and illustrate by way of example, and also be made from a material other than stainless steel. In the same way, the insulating chamber or gap may have any whatever width and shape, either regular or irregular.

## Claims

1. A double-body high thermal insulation gastronorm container for the transportation and distribution of hot food and drinks.

2. The container according to claim 1, characterised in that it is made up by two distinct complementary box-like bodies (16, 18) inserted into each other, connected along their respective edges (12, 12') and forming between them a continuous gap (26) which extends from bottom (14, 14') up to edges (12, 12').

3. The container according to claim 1 or 2, characterised in that each box-like body (16, 18) comprises a flat bottom (14, 14'), an edge (12, 12') and an inclined side surface (15, 5'); said box-like bodies having different heights and bottom surfaces (14, 14') and being inserted into each other and connected to each other along the respective edges (12, 12') so at to form between them a continuous chamber or gap (26) (26) of homogeneous height in the area comprised between said bottoms (14, 14') and of a width that decreases progressively from bottom (14, 14') towards edge (12, 12') in the area comprised between said side surfaces (15, 15').

4. The container according to claim 4, characterised in that the side surfaces of each box-like body (16, 18) are inclined at an inclination angle which is different for each body, so that they are separated along the whole surface of the container and joins only in correspondence of their upper edge (12, 12').

5. The container according to any of the preceding claims, characterised in that the thickness of the walls of the box-like external body (16) is greater that that of the box-like internal body (18).

6. The container according to any of the preceding claims, characterised in that edge (12) of the box-like external body (16), in correspondence of its free end (20), is substantially shaped as an inverted "U", with a first bending towards the outside with respect to said box-like body, with an orientation parallel to bottom (14), a second bending towards said bottom, parallel to its own vertical axis, and a further bending towards the outside to form an annular extension (4) with a parallel orientation with respect to bottom (14).

7. The container according to any of the preceding claims, characterised in that edge (12') of the box-like external body (18), in correspondence of its free end (32), is substantially bent towards the outside with an inverted "U" section with a first bending towards the outside of the container, parallel to bottom (14') and to the first bending of edge (12) of the external body (16) and a second downwards bending parallel to its own vertical axis and the second bending of edge (12) of said external body, so as to form a strip (34).

8. The container according to any of claims 5 and 6, characterised in that when the two box-like bodies (16, 18) are inserted into each other, the first bending of edge (12') of the internal body (18) rests in the corresponding first bending of edge (12) of the external body (16), and strip (34) of said edge (12') of the internal body superposes on the second bending of edge (12) of the box-like body (16); the lower end of said strip 34) being close to but not in touch with extension (24) of edge (12) of said external box-like body (16).

9. The container according to any of the preceding claims, characterised in that edges (12, 12') are connected by welding with welding addition material (28) in the space existing between extension (24) and strip (34).

10. The container according to any of the preceding claims, characterised in that an insulating material (30) is inserted in the chamber or gap (36) or part thereof.

11. The container according to any of the preceding claims, made from stainless steel in its various compositions and according to the international norm EN 631.
